(19) Europäisches Patentamt
European Patent Office
Office européen des brevets

(11) **EP 1 861 681 B1**

(12) **EUROPÄISCHE PATENTSCHRIFT**

(45) Veröffentlichungstag und Bekanntmachung des Hinweises auf die Patenterteilung:
**10.09.2008 Patentblatt 2008/37**

(51) Int Cl.:
*G01D 5/244* *(2006.01)*    *G01D 5/245* *(2006.01)*
*B62D 15/02* *(2006.01)*

(21) Anmeldenummer: **06707743.8**

(22) Anmeldetag: **18.01.2006**

(86) Internationale Anmeldenummer:
**PCT/EP2006/050281**

(87) Internationale Veröffentlichungsnummer:
**WO 2006/097373 (21.09.2006 Gazette 2006/38)**

(54) **VERFAHREN UND SCHALTUNGSANORDNUNG ZUR ERFASSUNG UND KOMPENSATION EINES TILTWINKELS BEI DER DETEKTION EINER BEWEGUNG ODER EINES DREHWINKELS**

METHOD AND CIRCUIT ARRANGEMENT FOR RECORDING AND COMPENSATING A TILT ANGLE WHEN DETECTING A ROTATION MOVEMENT OR ANGLE

PROCEDE ET CIRCUIT PERMETTANT DE DETECTER ET DE COMPENSER UN ANGLE D'INCLINAISON LORS DE LA DETECTION D'UN MOUVEMENT OU D'UN ANGLE DE ROTATION

(84) Benannte Vertragsstaaten:
**DE ES IT**

(30) Priorität: **14.03.2005 DE 102005011576**

(43) Veröffentlichungstag der Anmeldung:
**05.12.2007 Patentblatt 2007/49**

(73) Patentinhaber: **ROBERT BOSCH GMBH**
**70442 Stuttgart (DE)**

(72) Erfinder: **WENZLER, Axel**
**71229 Leonberg (DE)**

(56) Entgegenhaltungen:
**DE-B3- 10 247 319    DE-B3- 10 247 321**
**US-A1- 2004 080 451**

EP 1 861 681 B1

## Beschreibung

Stand der Technik

Die Erfindung betrifft ein Verfahren und eine Schaltungsanordnung zur Erfassung und Kompensation eines Tiltwinkels bei der Detektion einer Bewegung oder eines Drehwinkels mit einer Sensoranordnung, insbesondere an Achsen oder Wellen, nach der Gattung des Hauptanspruchs.

Beispielsweise müssen zur Erfassung des auf eine Lenkradachse eines Kraftfahrzeuges wirkenden Drehmomentes während der Drehung des Lenkrades sehr kleine Winkeländerungen in beiden Drehrichtungen des Lenkrades gemessen werden. Hierbei sind Winkelgeber anwendbar, die eine Winkelstellung aufgrund der Auswertung von optisch, magnetisch oder sonst wie durch die Drehung erzeugten und mit geeigneten Mitteln detektierten Signalen auswerten. Zur Erhöhung der Messgenauigkeit und insbesondere zur Messung des Drehmomentes aufgrund einer Torsion an der drehenden Welle werden eine Mehrzahl solcher, in der Regel periodisch auftretenden Messwerte ausgewertet, so dass hier mehrere Phasenmesswerte auftreten, aus denen die zu messende Größe, wie z.B. der Drehwinkel oder eine Winkeldifferenz, zu bestimmen ist.

Zur Auswertung solcher Phasenmesswerte wird im Fall von mehr als zwei Phasensignalen beispielsweise ein in der DE 101 42 449 A1 beschriebenes Verfahren vorgeschlagen. Hier werden die gemessenen Phasenwerte mittels einem linearen Transformationsverfahren rechnerisch umgeformt und mit einer vorgegebenen Gewichtung ausgewertet. Hier ist somit ein Verfahren beschrieben, das aus N mehrdeutigen, ev. auch gestörten Phasenmesswerten einen hochgenauen, robusten und eindeutigen Phasenmesswert erzeugt. Das Verfahren findet Anwendung z.B. bei einem optischen Winkelsensor, bei dem N parallele Spuren auf einem Zylinder aufgebracht sind. Auf jeder der N Spuren (i=1...N) befinden sich $n_i$ Perioden einer Phaseninformation, die z.B. im optischen Fall durch $n_i$ Perioden von Hell-Dunkelübergängen repräsentiert wird. Andere Sensorprinzipien, z.B. magnetisch oder kapazitiv, sind hier auch möglich. Auch können die Spuren des Sensors statt auf einem Zylinder auf einer Ebene aufgebracht sein, beispielsweise bei einem Wegsensor.

Bei einem zuvor beschriebenen optischen Winkelsensor mit N in Achsrichtung übereinanderliegenden parallelen Spuren auf dem Umfang eines Zylinders kann es vorkommen, dass der Sensorkopf bzw. die Leseeinrichtung in dieser Achsrichtung eine Schieflage gegenüber den Sensorspuren aufweist. Dieser Winkel der Schieflage wird als Tiltwinkel bezeichnet, wie er beispielsweise in der DE 102 47 319 A1 beschrieben ist, und führt einerseits zu Fehlern im berechneten Drehwinkel und es wird weiterhin vor allem aber die Robustheit des Auswerteverfahrens reduziert. Ab einer gewissen Größe dieser Schieflage wird eine Auswertung ohne Kompensation des Tiltwinkels sogar unmöglich.

Weiterhin ist aus der DE 102 47 321 A1 bekannt, dass beispielsweise bei einem Verfahren zum Offsetabgleich in einer vergleichbaren Sensoranordnung ein beim Einbau fest erzeugter Tiltwinkel kompensiert werden kann. Verändert sich der Tiltwinkel während des Betriebs oder über die Lebensdauer, beispielsweise durch thermische oder mechanische Einflüsse, so ist dann eine Bestimmung des Tiltwinkels und gegebenenfalls eine Kompensation notwendig.

In der DE 102 47 319 A1 ist, wie erwähnt, eine Methode zur Kompensation des oben erwähnten Tiltwinkels beschrieben, wobei zur Bestimmung des Tiltwinkels hier ein Verfahren benutzt wird, das den Tiltwinkel nach der Methode des kleinsten Fehlerquadrats bestimmt. Dieses Verfahren hat zwar viele günstige Eigenschaften, allerdings kann es nur bei relativ kleinen Tiltwinkeln verwendet werden.

Für sich gesehen ist es außerdem auch üblich, die Phasencodes der beiden äußeren Spuren auf einem rotierenden Zylinder identisch zu wählen. Ein Tiltwinkel kann dann direkt durch Vergleich der zugehörigen detektierten Phasensignale bestimmt werden; Informationen aus den mittleren Spuren werden hier nicht verwendet. Hierbei ist es aber nachteilig, dass ein erhöhter Aufwand durch die zusätzliche Codespur notwendig ist, der nur zur Tiltwinkelbestimmung dient. Auch dieses Verfahren kann nur bis zu relativ kleinen Tiltwinkeln verwendet werden, so dass bei vielen Anwendungsfällen der oben beschriebenen Sensoranordnung mit relativ großen Tiltwinkeln die genannten bekannten Verfahren zur Tiltwinkelbestimmung nicht eingesetzt werden können.

Vorteile der Erfindung

Mit dem eingangs erwähnten gattungsgemäßen Verfahren zur Erfassung der Bewegung oder des Drehwinkels an bewegten mechanischen Bauteilen können Phasenmesswerte ausgewertet werden, die durch Abtasten von mehreren übereinander angeordneten Phasenspuren durch ebenfalls senkrecht zur Bewegungsrichtung des Bauteils übereinander eingebauten und den Spuren jeweils zugeordneten Sensoren erzeugt werden. Die Phasenmesswerte können beispielsweise mittels einer linearen Transformation eines Vektors aus N Phasenmesswerten in einen N-1 dimensionalen Raum rechnerisch transformiert werden.

Mit der Erfindung kann in vorteilhafter Weise eine Bestimmung des Tiltwinkels als Schieflage der Sensoranordnung senkrecht zur Bewegungsrichtung des Bauteils und eine Kompensation des dadurch verursachten Messfehlers mittels eines Kompensationsfaktors mit folgenden Verfahrensschritten vorgenommen werden.

Es werden die Phasenmesswerte aller Phasenspuren mit Hilfe einer sogenannten m x N-Matrix mit jeweils ganzzahligen Einträgen in m Signale nach der bei der Beschreibung des Ausführungsbeispiels angegebenen Beziehung (4) transformiert. Eine vergleichbare Matrixoperation ist in der eingangs erwähnten DE 101 42 449 A1 ausführlich beschrieben. Von diesen Signalen wird gemäß der Erfindung der nichtganzzahlige Anteil $\underline{s}$ durch Runden und Differenzbildung entsprechend der Gleichung (6) ermittelt.

Die so ermittelten Signale $\underline{s}$ verhalten sich wie Phasensignale entsprechend den nach der DE 101 42 449 A1 verwendeten Signalen. Es wird sodann erfindungsgemäß ein Korrekturfaktor $\underline{k}$ mittels einer weiteren mehrdimensionalen Phasenauswertung und einem von den vorgegebenen Periodenzahlen abhängigen Vektor $\underline{c}$ bestimmt. Aus den Werten für $\underline{k}$ und $\underline{s}$ kann dann der Kompensationswert Q bzw. q * $d_0$ ermittelt werden. In der Realität sind die Signale $\underline{s}$ oft stark verrauscht; da sie von der Winkelposition jedoch unabhängig sind, können sie über mehrere Messungen gemittelt werden. Zur Mittelung kann beispielsweise das in der erwähnten DE 1012 47 321 A1 beschriebene iterative Mittelungsverfahren eingesetzt werden, wobei das arithmetische Mittel aufgrund der nichtlinearen Operation nach Gleichung (6) vom wirklichen Mittelwert abweichen kann.

Der Kompensationswert kann jedoch auch in vorteilhafter Weise nach der Methode der kleinsten Fehlerquadrate aus der Beziehung (10) ermittelt werden.

Abschließend kann dann aus dem Kompensationswert ein systematischer Messfehler nach der Beziehung (1) ermittelt und die Kompensation durch Abzug des Messfehlers vom Phasenmesswert durchgeführt werden.

Mit der Erfindung ist in vorteilhafter Weise die Bestimmung eines Tiltwinkels in der oben erwähnten Sensoranordnung möglich, bei der die Bestimmung auch bei größeren Verdrehungen (Tiltwinkel) zuverlässig erfolgen kann; typischerweise um einen Faktor 5 bis 10 größer als bei dem aus der DE 102 47 319 A1 bekannten Verfahren. Der bestimmte Tiltwinkel ist sehr genau und die Anordnung arbeitet auch bei verrauschten Phasenmesswerten noch sehr zuverlässig.

Das erfindungsgemäße Verfahren und die vorgeschlagene Schaltungsanordnung nutzen die gesamte zur Verfügung stehende Information, d.h. insbesondere die Phasenmesswerte auch der inneren Phasengeberspuren, zur eindeutigen und genauen Bestimmung des Tiltwinkels. Zur weiteren Genauigkeits- und Robustheitserhöhung kann eine Mittelung auch über mehrere Messungen durchgeführt werden. Dies wird dadurch möglich, das die Phasenmesswerte mit einem Transformationsschritt in Signale übergeführt werden, die von der absoluten Winkelposition des jeweiligen Sensors unabhängig sind.

Die Kompensation des Fehlers und der Abgleich erfolgt ebenso wie in der eingangs erwähnten DE 102 47 319 A1 beschrieben, rein rechnerisch; es sind somit keine mechanischen Eingriffe in die Sensoranordnung notwendig. Aufwändige und teure mechanische Vorkehrungen sowie spezielle Vorgehensweisen bei der Produktion und beim Zusammenbau, die dazu dienen, den Bereich von möglichen Tiltwinkeln zu reduzieren, können eingespart werden, so dass hier Kosten eingespart werden können.

<u>Zeichnung</u>

Ein Ausführungsbeispiel einer Sensoranordnung zur Durchführung des erfindungsgemäßen Verfahrens wird anhand der Zeichnung erläutert. Es zeigen:

Figur 1 eine prinzipielle Anordnung von optischen Phasenspuren auf einem Zylinder an einer Welle,

Figur 2 die Anordnung von vier übereinander angeordneten abgewickelten Phasenspuren im Detail mit der Soll- und der Ist-Ausrichtung eines optischen Sensors und

Figur 3 ein Blockschaltbild eines Ausführungsbeispiel einer Schaltungsanordnung zur Durchführung des Verfahrens.

<u>Beschreibung des Ausführungsbeispiels</u>

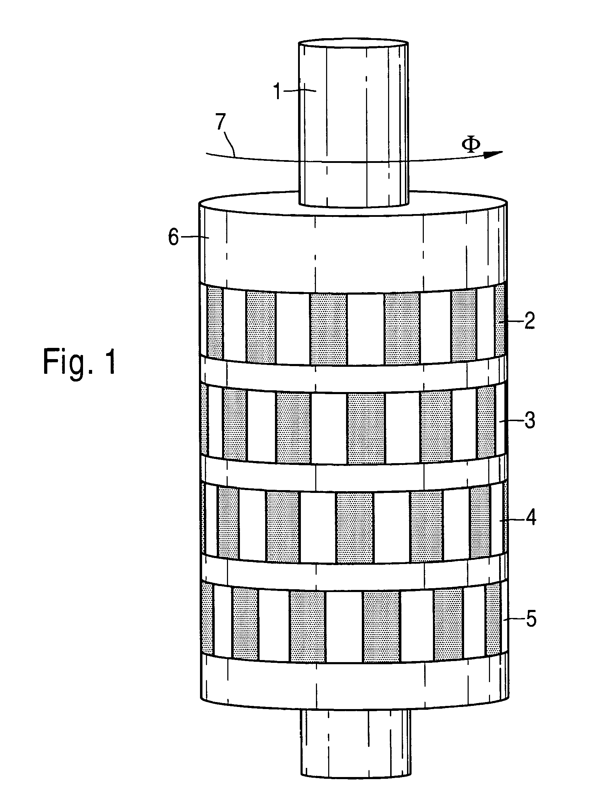

In Figur 1 ist in einer schematischen Ansicht eine Achse 1 als rotierendes Bauelement gezeigt, deren Drehwinkel Φ aus Phasenspuren 2, 3, 4 und 5 aus Hell-Dunkel-Feldern als optische Signalgeber auf einem Sensorzylinder 6 mit einer geeigneten gegenüberliegenden optischen Sensoranordnung während einer Drehung gemäß Pfeil 7 ermittelbar ist. Die optische Sensoranordnung ist dabei prinzipiell aus der in der Beschreibungseinleitung als Stand der Technik erwähnten DE 101 42 449 A1 bekannt.

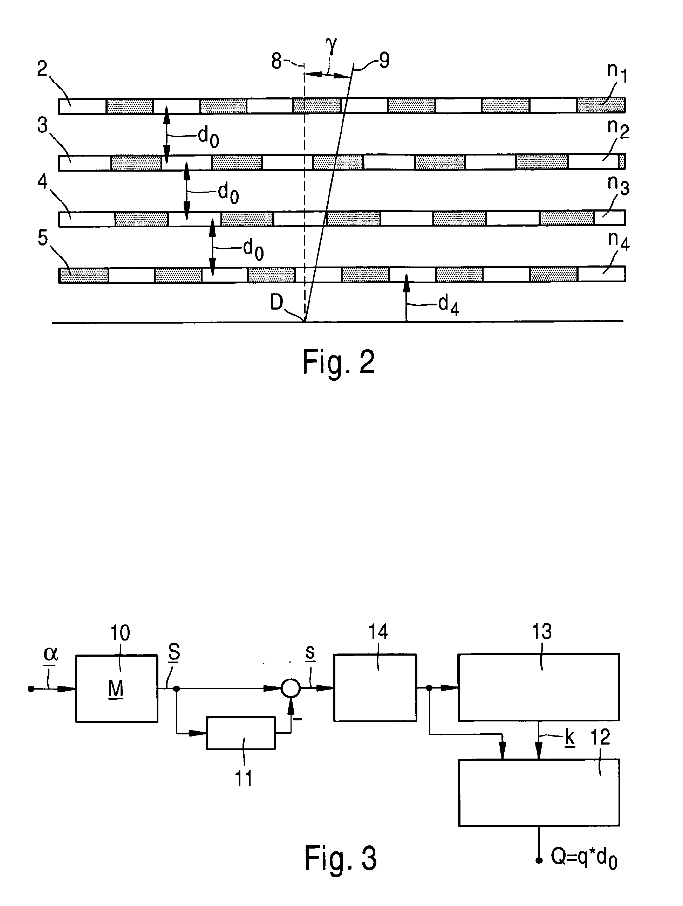

Die Beschreibung des erfindungsgemäßen Verfahrens erfolgt anhand einer mehrdimensionalen Phasenauswertung der Signale der Sensoranordnung, wobei in Figur 2 die Phasengeberspuren 2 bis 5 als eine Abwicklung gezeigt sind. Pro Umdrehung des Sensorzylinders 6 werden in den einzelnen Phasengeberspuren 2 bis 5 die optischen Signalgeber $n_1$, $n_2$, $n_3$, $n_4$ Perioden durchlaufen.

Die Soll-Ausrichtung 8 des Lesekopfes der hier nicht dargestellten Sensoranordnung ist in der Figur 2 gestrichelt und die tatsächliche Einbaulage als Ist-Ausrichtung ist durchgezogen als Linie 9 gezeichnet. Der Tiltwinkel $\gamma$ ist hier als

Schieflage des Sensorkopfes ausgehend vom unteren Drehpunkt D seiner Einbauposition in einem Abstand $d_4$ von der unteren Phasengeberspur 5 zu erkennen, wobei die weiteren Abstände der Phasengeberspuren 5 bis 2 untereinander mit $d_0$ gekennzeichnet sind.

Der Lesekopf misst in jeder der Phasengeberspuren 2 bis 5 einen anhand einer Schaltungsanordnung nach Figur 3 auszuwertenden Phasenwinkel $\alpha$ zwischen den Hell-/Dunkelübergängen, wobei in dem Fall, in dem sich der Sensorzylinder 6 in der i-ten Spur (mit n=1...i) um eine Periode, d.h. ein Schwarz-Weiß-Paar, weiterdreht, der entsprechende Phasenwinkel $\alpha$ einen Bereich von 0 bis $2\pi$ durchläuft. In der folgenden Beschreibung des Verfahrens werden jedoch normierte Phasenwinkel betrachtet, das heißt, sie durchlaufen einen Bereich von 0 bis 1 anstatt 0 bis $2\pi$.

Aus den periodischen und damit mehrdeutigen Phasenwinkeln der Phasengeberspuren 2 bis 5 kann mit Hilfe des im eingangs erwähnten Stand der Technik DE 101 42 449 A1 beschriebenen Algorithmus die eindeutige Winkellage eines zylindrischen Phasengebers oder Sensors bzw. die jeweilige Position im Fall eines Linearweggebers ermittelt werden.

Weist beispielsweise der Lesekopf einen Tiltwinkel $\gamma$ mit dem Punkt D als bekanntem Drehpunkt, auf, dann gilt für die dadurch verursachten Messfehler $\Delta\alpha_i$ der Phasenwinkel $\alpha_i$:

$$\Delta\alpha_i = q * d_i * n_i \quad \mathrm{mod}1 \qquad (1)$$

Hierbei bezeichnet $d_i$ den jeweiligen Abstand der i-ten Spur zum Drehpunkt D, d.h. Spur 4 mit dem Abstand $d_4$. usw.

Im Folgenden wird das Verfahren für die vier Phasenspuren 2 bis 5 beschrieben, es lässt sich einfach auf eine andere Anzahl von Spuren übertragen. Für die in der Figur 2 dargestellte Anordnung gilt dann die folgende Gleichung:

$$\Delta\underline{\alpha} = \begin{bmatrix} \Delta\alpha_1 \\ \Delta\alpha_2 \\ \Delta\alpha_3 \\ \Delta\alpha_4 \end{bmatrix} = q \cdot d_0 \begin{bmatrix} 3 \cdot n_1 \\ 2 \cdot n_2 \\ 1 \cdot n_3 \\ 0 \cdot n_4 \end{bmatrix} + q \cdot d_4 \begin{bmatrix} n_1 \\ n_2 \\ n_3 \\ n_4 \end{bmatrix} \qquad (2)$$

Der Faktor q ist nunmehr aus Messwerten der Phasenwinkel $\alpha$ zu bestimmen; er hängt außerdem vom Tiltwinkel $\gamma$ und von der Sensorgeometrie ab. Für den Fall eines Zylinders mit dem Radius R als Träger der Phasengeberspuren 2 bis 5 gilt beispielsweise:

$$q = \frac{\tan(\gamma)}{2 \cdot \pi \cdot R} \qquad (3)$$

Das erfindungsgemäße Verfahren zielt jedoch darauf ab, aus den Messwerten $\alpha_i$ den Faktor q zu bestimmen. Dann können nach der Gleichung (1) die systematischen Messfehler $\Delta\alpha_i$ bestimmt und aus den gemessenen Werten herausgerechnet werden. In der Figur 3 ist hierzu ein Blockschaltbild mit den einzelnen hierzu erforderlichen Verfahrensschritten zur Realisierung einer Schaltungsanordnung gezeigt.

Im ersten Schritt des Verfahrens werden die Messwerte $\alpha_i$ mit Hilfe einer Matrixoperation $\underline{M}$ gemäß Block 10 der Figur 3 in m Signale $\underline{S}$ transformiert:

$$\underline{S} = \begin{bmatrix} S_1 \\ \dots \\ \dots \\ S_m \end{bmatrix} = \underline{M} \cdot \begin{bmatrix} \alpha_1 \\ \alpha_2 \\ \alpha_3 \\ \alpha_4 \end{bmatrix} \qquad (4)$$

Die Matrix $\underline{M}$ ist dabei eine sogenannte m x N-Matrix mit ganzzahligen Einträgen und der Eigenschaft:

$$\underline{M} \cdot \begin{bmatrix} n_1 \\ n_2 \\ n_3 \\ n_4 \end{bmatrix} = \underline{0} \qquad (5)$$

Nach der zuvor erwähnten DE 101 42 449 A1 ist der erste somit für sich bekannte Schritt die Berechnung des Matrizenproduktes $\underline{B} * \underline{A}$, d.h. eine Berechnung des eindeutigen Winkels des Zylinders 6 durch die Multiplikation des Vektors der mehrdeutigen Winkelwerte $\alpha_i$ mit einer Matrix $\underline{A}$ und nachfolgend mit einer Matrix $\underline{B}$. Die Matrix $\underline{M}$ kann dabei Teile des Matritzenproduktes $\underline{B} * \underline{A}$ enthalten.

Von den Signalen $\underline{S}$ nach der Gleichung (4) wird nun der nichtganzzahlige Anteil $\underline{s}$ mit

$$\underline{s} = \underline{S} - \text{runden}(\underline{S}) \qquad (6)$$

gemäß Block 11 der Figur 3 betrachtet. Für die Signale $\underline{s}$ gilt nun:

$$\underline{s} = \underline{C} * q * d_0 - \underline{k} \qquad (7)$$

mit einem unbekannten Vektor $\underline{k}$ aus ganzen Zahlen und einem Vektor $\underline{C}$ mit

$$\underline{C} = \underline{M} \cdot \begin{bmatrix} 3 & 0 & 0 & 0 \\ 0 & 2 & 0 & 0 \\ 0 & 0 & 1 & 0 \\ 0 & 0 & 0 & 0 \end{bmatrix} \cdot \begin{bmatrix} n_1 \\ n_2 \\ n_3 \\ n_4 \end{bmatrix} \qquad (8),$$

der stets ganzzahlige Einträge hat. Die Signale $\underline{s}$ nach der Gleichung (7) sind somit von der absoluten Winkelposition des optischen Sensors unabhängig.

Im Folgenden soll nun ein Zahlenbeispiel mit vorgegebenen Periodenzahlen gezeigt werden. Für die Perioden-zahlen

$$\begin{bmatrix} n_1 \\ n_2 \\ n_3 \\ n_4 \end{bmatrix} = \begin{bmatrix} 57 \\ 58 \\ 69 \\ 76 \end{bmatrix}$$

kann die folgende Matrix $\underline{M}$ verwendet werden:

$$\underline{M} = \begin{bmatrix} 4 & 0 & 0 & -3 \\ 0 & 5 & -2 & -2 \\ 3 & -2 & -3 & 2 \end{bmatrix}$$

Hierbei ist m = 3 und der Vektor $\underline{C}$ ergibt sich damit zu

$$\underline{C} = \begin{bmatrix} 684 \\ 442 \\ 74 \end{bmatrix} \qquad .$$

Aus der Gleichung (7) folgt, dass sich die Signale $\underline{s}$ genau so verhalten wie Phasensignale mit den Periodenzahlen $\underline{C}$. Das heißt, zur Bestimmung des gesuchten Wertes $q$ kann beispielsweise das in der DE 101 42 449 A1 beschriebene Verfahren zur Auswertung von Phasensignalen verwendet werden. Dieses liefert dann den Vektor $\underline{k}$ von ganzen Zahlen in der Gleichung (7).

Damit beschreibt die Gleichung (7) $m$ Gleichungen für den gesuchten Wert Q als Kompensationswert für den durch den Tiltwinkel $\gamma$ hervorgerufenen Fehler.

$$Q = q * d_0. \qquad\qquad (9)$$

Aus den zuvor erwähnten m Gleichungen für den gesuchten Wert $Q$ lässt sich dann mit der Methode der kleinsten Fehlerquadrate ein optimaler Wert für $Q$ bestimmen:

$$Q = \frac{\sum_{i=1}^{m}(s_i + k_i)\cdot C_i}{\sum_{i=1}^{m} C_i^2} \qquad\qquad (10)$$

Mit den Werten $s_i$, $k_i$ und $C_i$ sind dabei die Komponenten der Vektoren $\underline{s}$, $\underline{k}$ und $\underline{C}$ bezeichnet.

Der Wert $Q$ nach der Gleichung (10) kann somit zur Kompensation des Tiltwinkelfehlers verwendet werden, wobei bei Bedarf der Tiltwinkel $\gamma$ selbst über die Beziehung (3) berechnet werden kann. In der Regel reicht jedoch auch die Kenntnis des Produktes $Q = q * d_0$ aus der Gleichung (9) aus. Oft genügt es auch, dass für den Wert $Q$ nur ein kleiner Teil des Eindeutigkeitsbereichs (-0,5 bis 0,5) betrachtet wird, so dass die Bestimmung des Wertes $\underline{k}$ aus den

Werten für $\underline{s}$ (Gleichung (7)) vereinfacht werden kann.

Aus der Figur 3 ist zu entnehmen, dass zur Berechnung des Wertes $Q$ in Block 12 die mehrdimensionale (*m*-dimensionale) Phasenauswertung gemäß Block 13 zur Ermittlung des Wertes $\underline{k}$ und die Werte für $\underline{s}$ nach der Gleichung (6) herangezogen werden.

In vielen Anwendungsfällen sind die Signale $\underline{s}$ oft stark verrauscht. Da sie von der Winkelposition des Signalzylinders 6 (Figur 1) jedoch unabhängig sind, können sie allerdings über mehrere Messungen gemittelt werden. Zur Mittelung kann hier beispielsweise gemäß Block 14 ein an sich bekanntes iteratives Mittelungsverfahren eingesetzt werden, wobei das arithmetische Mittel jedoch aufgrund der nichtlinearen Operation nach der Gleichung (6) vom wirklichen Mittelwert abweichen kann.

**Patentansprüche**

1. Verfahren zur Erfassung der Bewegung oder des Drehwinkels an bewegten mechanischen Bauteilen, bei dem

 - Phasenmesswerte ausgewertet werden, die durch Abtasten von mehreren Phasenspuren (2,3,4,5) mittels einer Sensoranordnung erzeugt werden,
 - eine Bestimmung und Kompensation eines Tiltwinkels ($\gamma$) als Schieflage der Sensoranordnung senkrecht zur Bewegungsrichtung des Bauteils und der **dadurch** verursachten Messfehler ($\Delta\alpha_i$) mittels eines Kompensationsfaktors (Q,q) vorgenommen wird, der mit folgenden Verfahrensschritten ermittelt wird:
 - es werden die Phasenmesswerte ($\alpha_i$) aller Phasenspuren (2,3,4,5) mit Hilfe einer m x 4-Matrix ($\underline{M}$) mit jeweils ganzzahligen Einträgen in m Signale ($\underline{S}$) nach der Beziehung

$$\underline{S} = \begin{bmatrix} S_1 \\ \cdots \\ \cdots \\ S_m \end{bmatrix} = \underline{M} \cdot \begin{bmatrix} \alpha_1 \\ \alpha_2 \\ \alpha_3 \\ \alpha_4 \end{bmatrix} \qquad (4)$$

transformiert,
 - von den Signalen ($\underline{S}$) wird der nichtganzzahlige Anteil $\underline{s}$ durch die Beziehung (6) $\underline{s} = \underline{S}$-runden($\underline{S}$) als von der absoluten Winkelposition unabhängiges Signal ausgewertet,
 - es wird ein Korrekturfaktor $\underline{k}$ mittels einer mehrdimensionalen Phasenauswertung und einem von den vorgegebenen Periodenzahlen abhängigen Vektor ($\underline{C}$) bestimmt und aus den Werten ($\underline{k}$) und ($\underline{s}$) wird der Kompensationswert ($Q$) ermittelt.

2. Verfahren nach Anspruch 1, **dadurch gekennzeichnet, dass**

 - der Kompensationswert (Q,q) nach der Methode der kleinsten Fehlerquadrate aus der Beziehung

$$Q = \frac{\sum_{i=1}^{m} (s_i + k_i) \cdot C_i}{\sum_{i=1}^{m} C_i^2} \quad (10) \text{ ermittelt wird.}$$

3. Verfahren nach Anspruch 1 oder 2, **dadurch gekennzeichnet, dass**

 - die Signale ($\underline{s}$) gemittelt werden.

4. Verfahren nach einem der vorhergehenden Ansprüche, **dadurch gekennzeichnet, dass**

 - aus dem Kompensationswert ($Q,q$) ein systematischer Messfehler ($\Delta\alpha_i$) nach der Beziehung (1) $\Delta\alpha_i = q * d_i * n_i$, mit dem Abstand ($d_i$) zum Drehpunkt (D) des Tiltwinkels ($\gamma$), ermittelt wird und die Kompensation durch

Abzug des Messfehlers ($\Delta\alpha_i$) vom Phasenmesswert ($\alpha_i$) durchgeführt wird.

5. Schaltungsanordnung zur Durchführung des Verfahrens nach einem der vorhergehenden Ansprüche, **dadurch gekennzeichnet, dass**

- zur Ermittlung und Kompensation eines Tiltwinkels ($\gamma$) einem mit Phasengeberspuren (2 bis 5) versehenen rotierenden Signalzylinder (6) eine Sensoranordnung gegenüberliegt, mit der aus den gemessenen Phasen-messwerten ($\alpha_i$) der Phasengeberspuren (2 bis 5) mit Bausteinen (10,11,12,13,14) zur Phasensignalauswertung ein Kompensationssignal (Q) für den Tiltwinkelfehler ermittelbar ist.

**Claims**

1. Method for detection of the movement or of the rotation angle of moving mechanical components, in which

- phase measured values are evaluated which are produced by scanning a plurality of phase tracks (2, 3, 4, 5) by means of a sensor arrangement,
- a tilt angle ($\gamma$) is determined and compensated for as a skew position of the sensor arrangement at right angles to the movement direction of the component, and the measurement error ($\Delta\alpha_i$) caused by this is determined and compensated for by means of a compensation factor (Q, q) which is determined using the following method steps:
- the phase measured values ($\alpha_i$) of all the phase tracks (2, 3, 4, 5) are transformed with the aid of an m x N-matrix ($\underline{M}$) in each case with integer entries in m signals (S) using the relationship

$$\underline{S} = \begin{bmatrix} S_1 \\ \cdots \\ \cdots \\ S_m \end{bmatrix} = \underline{M} \cdot \begin{bmatrix} \alpha_1 \\ \alpha_2 \\ \alpha_3 \\ \cdots \\ \alpha_N \end{bmatrix} \qquad (4)$$

- the non-integer component $\underline{s}$ of the signals ($\underline{S}$) is evaluated by means of the relationship (6) $\underline{s} = \underline{S}$ - round ($\underline{S}$) as a signal which is independent of the absolute angle position,
- a correction factor $\underline{k}$ is determined by means of a multidimensional phase evaluation and a vector ($\underline{C}$) which is dependent on the predetermined period numbers and the compensation value (Q) is determined from the values ($\underline{k}$) and ($\underline{s}$).

2. Method according to Claim 1, **characterized in that**

- the compensation value (Q, q) is determined using the least square errors method from the relationship

$$Q = \frac{\sum_{i=1}^{m}(s_i + k_i) \cdot C_i}{\sum_{i=1}^{m} C_i^2} \qquad (10)$$

3. Method according to Claim 1 or 2, **characterized in that**

- the signals (s) are averaged.

4. Method according to one of the preceding claims, **characterized in that**

- a systematic measurement error ($\Delta\alpha_i$) is determined from the compensation value (Q, q) using the relationship

(1) $\Delta\alpha_i = q * d_l * n_i$, with the distance ($d_i$) to the rotation point (D) of the tilt angle ($\gamma$), and the compensation is carried out by subtraction of the measurement error ($\Delta\alpha_i$) from the phase measured value ($\alpha_i$).

**5.** Circuit arrangement for carrying out the method according to one of the preceding claims, **characterized in that**

- in order to determine and compensate for a tilt angle ($\gamma$), a sensor arrangement is placed opposite a rotating signal cylinder (6), which is provided with phase transmitter tracks (2 to 5), by means of which sensor arrangement a compensation signal (Q) for the tilt angle error can be determined from the measured phase measured values ($\alpha_i$) of the phase transmitter tracks (2 to 5) by modules (10, 11, 12, 13, 14) for phase signal evaluation.

**Revendications**

**1.** Procédé de détection du mouvement ou de l'angle de rotation de pièces mécaniques en mouvement selon lequel :

- on exploite des valeurs de mesure de phases générées par la détection de plusieurs pistes de phases (2, 3, 4, 5) à l'aide d'un dispositif de capteur,
- on détermine et on compense un angle d'inclinaison ($\gamma$) comme position inclinée du dispositif de capteur perpendiculairement à la direction de mouvement de la pièce et de l'erreur de mesure ($\Delta\alpha_i$) ainsi occasionnée à l'aide d'un coefficient de compensation (Q, q), obtenu selon les étapes de procédé suivantes:
- on transforme les valeurs de mesure de phases ($\alpha_i$) de toutes les pistes de phases (2, 3, 4, 5) à l'aide d'une matrice m x N ($\underline{M}$) avec un nombre paire d'entrées respectives dans m signaux ($\underline{S}$) selon la relation :

$$S = \begin{bmatrix} S_1 \\ \dots \\ \\ \dots \\ S_= \end{bmatrix} = \underline{M} \begin{bmatrix} \alpha_1 \\ \alpha_2 \\ \alpha_3 \\ \dots \\ \alpha_N \end{bmatrix} \quad (4)$$

- parmi les signaux ($\underline{S}$), on exploite la partie non entière $\underline{s}$ selon la relation $\underline{s} = \underline{S}$-arrondi ($\underline{S}$), comme signal indépendant de la position angulaire absolue,
- on définit un coefficient de correction ($\underline{k}$) par une exploitation multidimensionnelle de phase et d'un vecteur ($\underline{C}$) dépendant des nombres de périodes prédéfinis et à partir des valeurs ($\underline{k}$) et ($\underline{s}$), on détermine la valeur de compensation (Q).

**2.** Procédé selon la revendication 1,
**caractérisé en ce que**
la valeur de compensation (Q, q) est obtenue selon le procédé de l'erreur quadratique la plus faible selon la relation :

$$Q = \frac{\sum_{i=1}^{m} (S_i + k_i).C_i}{\sum_{i=1}^{m} C_i^2} \quad (10)$$

**3.** procédé selon la revendication 1 ou 2,
**caractérisé en ce qu'**

- on fait une moyenne des signaux ($\underline{S}$).

**4.** procédé selon les revendications précédentes,

**caractérisé en ce qu'**

à partir de la valeur de compensation *(Q, q),* on détermine une erreur de mesure systématique ($\Delta\alpha_i$) selon la relation (1) $\Delta\alpha_i = q*d * ni_i$, avec la distance *(d$_i$)* par rapport au centre de rotation (D) de l'angle d'inclinaison ($\gamma$) et on effectue la compensation en retranchant l'erreur de mesure ($\Delta\alpha_i$) de la valeur mesurée de la phase ($\alpha_i$).

5. Circuit pour la mise en oeuvre du procédé selon l'une des revendications précédentes,
   **caractérisé en ce que**

   pour déterminer et compenser l'angle d'inclinaison ($\gamma$), on utilise un cylindre de signal (6) rotatif muni de pistes génératrices de phases (2-5), en regard d'un dispositif de capteur pour déterminer à partir des valeurs de phases mesurées ($\alpha_i$) des pistes génératrices de phases (2-5), avec des composants (10, 11, 12, 13, 14) pour exploiter les signaux de phases et donner un signal de compensation (Q) pour l'erreur d'angle d'inclinaison.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10142449 A1
- DE 10247319 A1
- DE 10247321 A1
- DE 101247321 A1